# EUROPEAN PATENT APPLICATION

(11) **EP 0 599 236 A1**
(43) Date of publication of application: **01.06.1994**
(21) Application number: 93118712.4
(22) Date of filing: 22.11.1993
(51) Int. Cl.: H04N 7/00, H04N 7/13, H04N 5/44, H04N 7/12

(54) **Television signal transceiver system with assisted post-processing by receiver**

(30) Priority: 25.11.1992 IT TO920953
(71) Applicant: SELECO S.p.A., I-33170 Pordenone (IT)
(72) Inventor: Vindigni, Antonio, I-33170 Pordenone (IT)
(74) Representative: Dini, Roberto, Dr. Ing.

(57) **Abstract**

The present invention refers to a transmission and reception system of television signals, in particular of the digital type; the main characteristic of the invention consists in the fact that it is provided to insert in the channel, in transmission, information on the movement of the image, and the use of such information, by way of the receiver, for improving the characteristics of the image.

## Description

The present invention refers to a transmission and reception system of television signals, in particular of the digital type.

It is known that, for improving the characteristics of video images, scanning converters are used, in particular for doubling the number of scanned lines.

For example, so as to obtain a progressive scanning signal starting from the interlaced scanning 2:1 signal received it is necessary to effect an interpolation able to supply the missing lines in the received signal, that are then inserted between the original lines, thus obtaining a signal having twice the number of lines per semi-field.

By effecting the interpolation, a loss becomes more or less evident in the area of the image in which a consistent movement is present; such loss becomes particularly visible in correspondence with high spatial frequencies and is noted under the form of blurring. Such effect is due to two causes: the starting signal is not of a limited band inasmuch it is not usually filtered; the movement of the image modifies the spectrum of the signal.

In fact the spectrum of an image, in the presence of purely transitory motion for example, presents frequency components being contained in an oriented plane within the three-dimensional space in a dependent way from the direction and intensity of the motion.

So as to compensate in a correct manner the damaging effects of the interpolation techniques in the presence of movement, it is necessary to estimate the actual movement, be it in intensity and direction.

However, an effective motion estimator is an extremely complex and very expensive circuit.

The aim of the present invention is that of indicating a transmission and reception system of television signals that allows an efficient compensation of the damaging effects of processing techniques of the image due to the movement of the image itself, without for this causing prohibitive costs on the overall costs of the receiver.

In allowing such aims the present invention has as its object a transmission and reception system of television signals, in particular of the digital type; characterised in the fact that it is provided to insert in the channel, in transmission, information on the movement of the image, and the use of such information, by way of the receiver, for improving the characteristics of the image.

Further aims and advantages of the present invention will result in being clear from the following detailed description and annexed drawings, supplied purely as an explanatory and non limiting example, wherein:
figure 1 schematically represents a transmitter of television signals according to the invention;
figure 2 schematically represents a receiver of television signals according to the invention.

The invention is based on the acknowledgement of the fact that the addition, by the receiver, of a possible up-conversion function, understood for obtaining a progressive scanning, for instance 1250/50/2:1, or a double frequency field, for instance 1250/100/2:1, allows for overcoming well known drawbacks such as interline twitters or dot crawls, in the first case, or large area flicker in the second case.

The algorithms for realising the up-conversion generally make use of a set of moving vectors; on the other hand the algorithms of compression provided for the digital transmission of a video signal, are based, by the transmission, on a set of vectors in motion, appropriately estimated, and that can be transmitted in a digital form, eventually compressed, as auxiliary information (Digital Assisted TV).

Unfortunately, this information is of no use for carrying out the up-conversion in the receiver; in fact these vectors are used for reducing the energy of the difference at the exit of the forecast loop at the transmission side and are calculated only with the aim of maximising the coding gain.

For realising the up-conversion a set of so-called physical vectors are necessary that supply precise position information, with an accuracy of resolution of at least one pixel.

A movement estimator of efficient abilities, that takes into consideration facts such as objects that appear and disappear, scene changes, small objects etc., results in being far more complicated and expensive than is reasonable for a consumer product.

As a consequence such a procedure can reasonably be provided only in transmission.

The up-conversion procedure, taking into consideration the performance and the limits of the various types of display, can significantly improve the overall quality of the image from a subjective point of view; whereas on the other hand such procedure requires information being extremely accurate so as to avoid disturbing instead of improving the quality of the system by introducing drawbacks.

Therefore the invention proposes to dedicate a portion of the capacity of the transmission channel for inserting such information, naturally being specifically protected. Even if such capacity can result in being of a few percent, the appropriate use of such information can improve significantly the quality of the reproduced image.

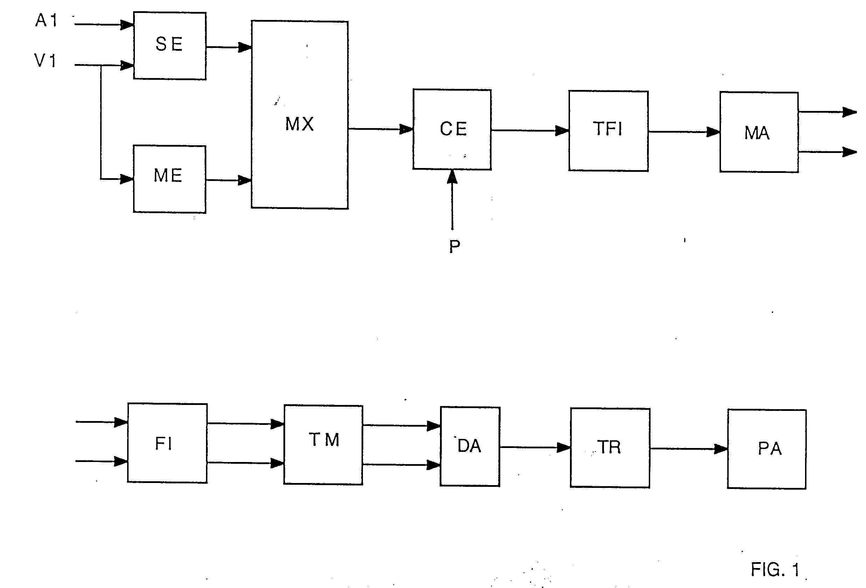

In figure 1, that represents the transmission part, reference tag Al indicates the audio signal to be transmitted; tag V1 indicates the video signal to be transmitted.

The reference tag SE indicates a coder source; the tag ME indicates a movement estimator; the tag MX indicates a multiplexer that receives information coming from the coder SE and from the movement estimator ME.

The signal exiting from the multiplexer MX reaches a channel coder CE, which also receives the information P relative to specific channel protection (P).

The signal exiting from the coder CE then reaches a temporal and frequencial interlacer TFI, and from here to a mapper MA.

From the mapper MA the signals cross a filter FI and a time multiplexer TM, then reaching an analogue/digital coder DA, a converter TR from intermediate frequency to radio frequency, and finally a power amplifier of radio frequency PA.

The new part of the transmitter according to the invention is represented by the fact that the information coming from the movement estimator ME is inserted in the transmitted television signal.

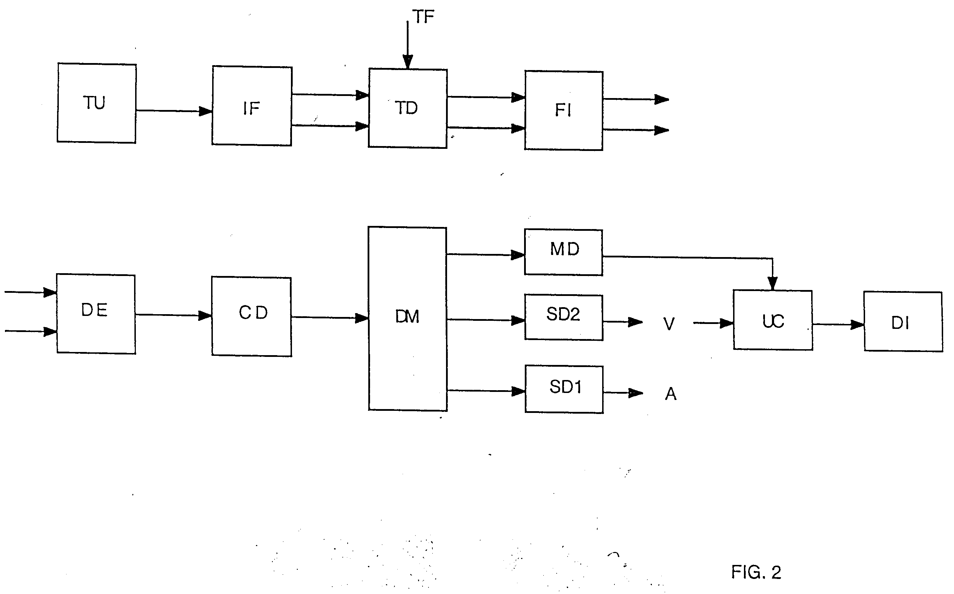

In figure 2, that represents the receiving part, the reference tag TU indicates a signal tuner; the tag IF indicates an intermediate frequency amplifier and demodulator; from here the signals reach a time demultiplexer TD; the tag TF indicates the time reference signal.

The demultiplexed signals then reach, by way of the filter FI, a deinterlacing circuit DE, and successively, by way of a channel decoder CD, a demultiplexer DM.

The demultiplexed audio, video and motion information signals exiting from the demultiplexer, reach an audio decoder SD1, a video decoder SD2, and a movement decoder MD respectively.

The video signals exiting the decoder SD2 reach an up-converter UC, to which the physical movement vectors also reach, coming from the movement decoder MD.

The improved signals exiting the converter UC are then sent to the display to then be presented.

The characteristics of the television signal transmission and reception system described result in being clear from the description of the example.

From the given description the advantages of the system object of the present invention also result in being clear.

It is clear that the system described is more advantageous than those known; it is also clear that numerous variants are possible by the skilled man, to the system described as an example, without for this departing from the novelty principles inherent in the invention.

For example in a similar manner the insertion of information on the movement of an image could also be provided in an analogue television system, with the aim of allowing, by way of the receiver, an assisted processing for the improvement of the characteristics of the image.

## Claims

1. transmission and reception system of television signals, in particular of the digital type; characterised in the fact that it is provided to insert in the channel, in transmission, information on the movement of the image, and the use of such information, at the receiver side, for improving the characteristics of the image.

2. transmission and reception system of television signals, according to claim 1, characterised in that said information on the movement of the image is represented by physical movement vectors.

3. transmission and reception system of television signals, according to claim 2, characterised in that said physical movement vectors are obtained, at the transmission side, through a movement estimator (ME), coded and inserted in transmission channel.

4. transmission and reception system of television signals, according to claim 3, characterised in that said physical movement vectors are decoded, at the receiver side, by way of a decoder (MD), and utilised for realising the up-conversion.

5. transmission and reception system of television signals, in particular analogue, characterised in that it is provided to insert in the channel, in transmission, information on the movement of the image, and the use of such information, at the receiver side, for an assisted processing aimed at improving the characteristics of the image.

6. transmission and reception for transmitting television signals that utilises the system according to one or more of the previous claims.

7. Apparatus for receiving television signals that utilises the system according to one or more of the previous claims.
